(19)

**Europäisches Patentamt**
**European Patent Office**
**Office européen des brevets**

(11)  **EP 4 625 879 A1**

(12)  # EUROPEAN PATENT APPLICATION

(43) Date of publication:
**01.10.2025 Bulletin 2025/40**

(21) Application number: **25162555.4**

(22) Date of filing: **10.03.2025**

(51) International Patent Classification (IPC):
**H04L 9/08** (2006.01)  **G06F 21/60** (2013.01)

(52) Cooperative Patent Classification (CPC):
**H04L 9/085; G06F 21/602; H04L 9/0855;**
H04L 67/1097

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2024 JP 2024049829**

(71) Applicants:
• **Kabushiki Kaisha Toshiba**
  **Tokyo 105-0023 (JP)**
• **Toshiba Digital Solutions Corporation**
  **Kawasaki-shi, Kanagawa 212-0013 (JP)**

(72) Inventors:
• **KAMURA, Koichiro**
  **Kawasaki-shi (JP)**
• **FUJII, Yoshihiro**
  **Kawasaki-shi (JP)**
• **MATSUO, Masakatsu**
  **Tokyo, 100-0005 (JP)**
• **MUTO, Koji**
  **Tokyo, 100-0005 (JP)**
• **SHINYA, Takuma**
  **Tokyo, 100- 0005 (JP)**

(74) Representative: **Marks & Clerk LLP**
  **15 Fetter Lane**
  **London EC4A 1BW (GB)**

(54)  **SECRET SHARING-BASED STORAGE METHOD AND SECRET SHARING-BASED STORAGE SYSTEM**

(57)  According to one embodiment, a user location (20,30) encrypts plain text data with a common key sent from a secret sharing location (40) and sends the encrypted data to the secret sharing location via a network (NW1-1). The secret sharing location generates multiple pieces of key-distributed data, generates multiple pieces of encrypted data distributed data obtained from the encrypted data, and distributes and sends the multiple pieces of key-distributed data and the multiple pieces of encrypted data distributed data to multiple cloud servers (S11,S12,S13,S21,S22,S23) via other network (NW2). The multiple cloud servers (S11,S12,S13,S21,S22,S23) store the received encrypted data distributed data and the corresponding received key-distributed data.

F I G. 1

EP 4 625 879 A1

## Description

FIELD

Embodiments described herein relate generally to a secret sharing-based storage method and a secret sharing-based storage system.

BACKGROUND

A secret sharing system can convert data that needs to be kept secret into multiple pieces of meaningless distributed data and then store each of the multiple pieces of meaningless distributed data on a server. Therefore, even if the pieces of meaningless distributed data are acquired (centralized) and simply combined, the original data cannot be restored.

In the secret sharing system, a method of creating the distributed data is referred to as threshold secret sharing. In this method, threshold secret sharing using exclusive OR (XOR) is known as a highly real-time method.

In addition, in the secret sharing system, in order to make it difficult for others to restore the original data from the distributed data, expensive communication channels and processing devices are required for encryption of the original data and secret sharing. In particular, the system becomes expensive if a secret sharing location (alternatively referred to as a secret sharing controller) is provided for each user who requires secret sharing and a physical random number generator is used at the secret sharing location for each user. For this reason, a secret sharing storage system which can reduce the number of secret sharing locations and suppress the increase in price has been developed.

Conventionally, secret sharing systems suppressing the increase in price have been developed, but there is a demand for the development of more inexpensive secret sharing systems with high confidentiality for contents (keys and plain texts).

Embodiments described herein aim to provide a secret sharing-based storage method and a secret sharing-based storage system that are inexpensive, flexible, and capable of executing secret sharing with high content confidentiality.

BRIEF DESCRIPTION OF THE DRAWINGS

FIG. 1 is a view showing a configuration example of a secret sharing-based storage system of an embodiment.
FIG. 2 is a block diagram showing a configuration example of a secret sharing location.
FIG. 3 is a block diagram showing a configuration example of a cloud server shown in FIG. 1.
FIG. 4 is a view illustrating a sequence between configuration blocks forming the secret sharing-based storage system shown in FIG. 1.
FIG. 5 is a flowchart showing operations of the configuration blocks forming the secret sharing-based storage system shown in FIG. 1, and connections between the configuration blocks.
FIG. 6 is a view showing another configuration example of the secret sharing-based storage system of the embodiment.
FIG. 7 is a view illustrating a sequence between configuration blocks forming the secret sharing-based storage system shown in FIG. 6.
FIG. 8 is a flowchart showing operations of the configuration blocks forming the secret sharing-based storage system shown in FIG. 6, and connections between the configuration blocks.
FIG. 9 is a view illustrating an example of a method of creating distributed data used in the secret sharing-based storage system of the embodiment.
FIG. 10 is a view illustrating an example of the method of creating the distributed data used in the secret sharing-based storage system of the embodiment.
FIG. 11 is a view showing yet another configuration example of the composition of the secret sharing-based storage system.
FIG. 12 is a view illustrating an example of the distributed data creating method in the embodiment.
FIG. 13 is a view illustrating yet another example of the distributed data creating method in the embodiment.

DETAILED DESCRIPTION

In general, according to one embodiment, there is provided a secret sharing-based storage method using a user location, a secret sharing location, and multiple cloud servers. The method comprises: causing the user location to encrypt plain text data with a common key sent from the secret sharing location and sending the encrypted data to the secret sharing location via a first network; causing the secret sharing location to generate multiple pieces of key-distributed data obtained by distributing the common key, receiving the encrypted data from the first network, generating multiple pieces of encrypted data-distributed data obtained by distributing the encrypted data, and distributing and sending the multiple pieces of key-distributed data and the multiple pieces of encrypted data distributed data to the multiple cloud servers via the second network; and causing each of the multiple cloud servers to store the corresponding received encrypted data-distributed data and the corresponding received key-distributed data.

Embodiments will be described hereinafter with reference to the accompanying drawings.

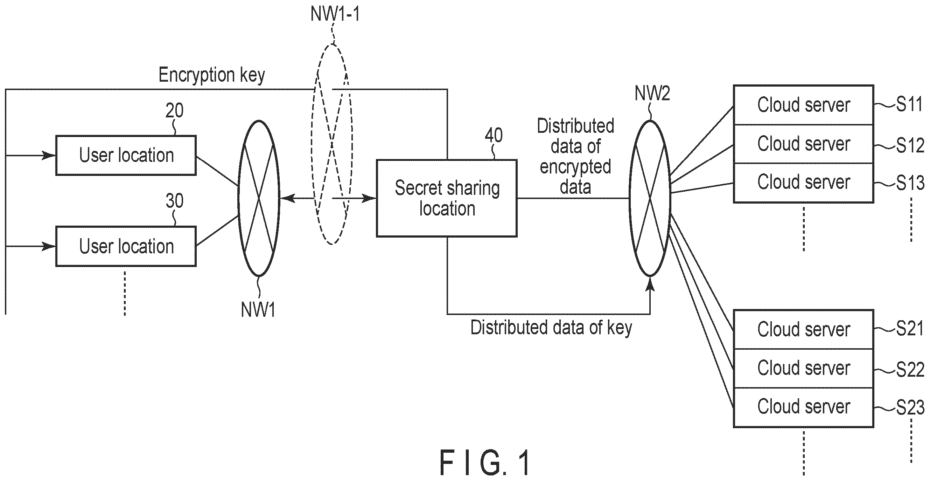

In FIG. 1, 20 and 30 denote user locations each of which can receive and store plain text data (for example, research reference data, medical data, historical data, and the like, which may include video data). In addition, the user locations comprise an encryption processing function of encrypting plain text data, and can generate encrypted data using a common key. The common key is received from a secret sharing location 40.

Furthermore, the user locations 20 and 30 can send encrypted data to the secret sharing location 40 via a network NW1. Ordinary Internet lines are used in the network NW1.

In addition, a quantum line (i.e., a line using optical cables and quantum nodes) may be laid between the secret sharing location 40 and the user locations 20, particularly, as a communication channel for the common key. In particular, if existing optical cables are already laid, these cables may be effectively used. The costs of the system construction can be thereby reduced. Furthermore, the communication circuit and its control program of the secret sharing location 40 may be devised such that the transmission path of the common key can be selectively used according to the user locations (user location databases). For example, the system administrator can switch or set the communication circuit to be used according to the business service, at a user location used by a specific business customer.

In FIG. 1, the communication path in which the user locations 20 and 30 receive the common key from the secret sharing location 40 and the communication path in which the user locations 20 and 30 send encrypted data to the secret sharing location 40 (network NW1) are illustrated separately. In the embodiments, however, a network such as the Internet may also be used for the communication path for the common key. In other words, the same network NW1-1 may be used for the communication path in which the user locations 20 and 30 receive the common key and the communication path in which the user locations 20 and 30 send the encrypted data to the secret sharing location 40. In this case, too, the reduction in costs of system construction can be achieved.

At the secret sharing location 40, the distributed data of the encrypted data and the distributed data of the key are generated. The distributed data of the encrypted data is distributed to multiple cloud servers S11, S12, S13, . . . and the distributed data of the key is distributed to multiple cloud servers S21, S22, S23, .... The multiple cloud servers S11, S12, S13, . . . comprise a receiving function and store the distributed data of the encrypted data associated to the cloud servers, respectively. In addition, the multiple cloud servers S21, S22, S23, . . . also comprise a receiving function and store the distributed data of the keys that are associated to the cloud servers, respectively.

In the above process, the secret sharing location 40 comprises a distribution execution program for generating the distributed data of the encrypted data and the distributed data of the keys. In addition, the secret sharing location 40 comprises a centralization execution program that is used when the distributed data of the encrypted data and the distributed data of the key are collected (centralized). As for this distribution/centralization execution program, not a pair, but multiple pairs may be prepared. The pairs may be switched to any method (distribution execution/centralization execution method), which may be adopted according to the operating time (month, day, time, period, and the like), or may be switched to any method (distribution execution/centralization execution method), which may be adopted according to the user (client).

In this case, each of the multiple distribution and centralization execution programs is identified by a distribution/centralization execution identification code, which is linked to the user (client identification code). This distribution/centralization execution identification code may be stored and managed by the secret sharing location or may be sent to the corresponding user such that the user location may manage its own distribution/-centralization execution identification code. In this case, when requesting the secret sharing location 40 to execute secret sharing of the own data, the user may use its own identification code as the request information for the secret sharing location 40.

Furthermore, the secret sharing location 40 sends the distributed data of the encrypted data and the distributed data of the key to the multiple cloud servers. In this case, the secret sharing location 40 generates recovery management information that is linked to the user (client identification code), the distributed data (data identification code), and the cloud servers (access destination identification codes).

The recovery management information may be stored and managed in the secret sharing location or may be sent to the user and managed by the user location. Alternatively, both the secret sharing location and the user location may manage the recovery management information. When the distributed data is recovered, the above recovery management information is used in response to the user's request. In the case of centralization, the program with the distribution/centralization execution identification code linked to the recovery management information is used.

As described above, the secret sharing location 40 is independently installed outside the multiple user locations, and is used commonly for the multiple user locations. Therefore, a secret sharing-based storage method suppressing the price information of the overall system and having high confidentiality can be provided.

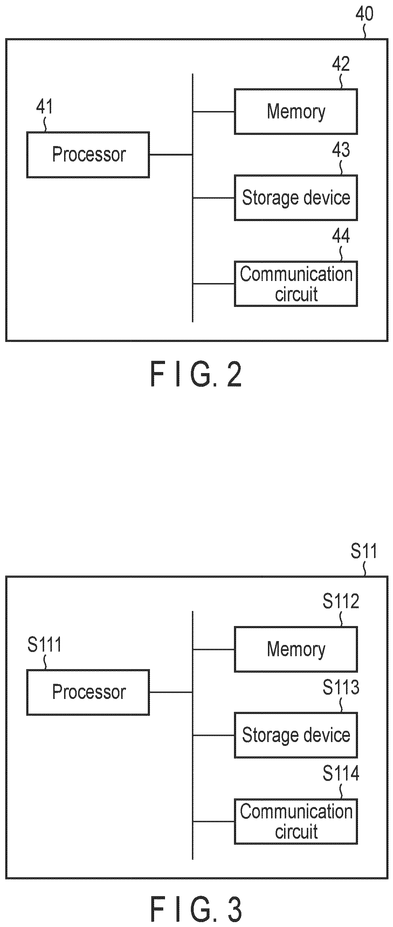

FIG. 2 shows an example of a block configuration of the hardware inside the secret sharing location 40.

The secret sharing location 40 includes a processor 41, a memory 42, a storage device 43, and a communication circuit 44.

The processor 41 is configured using, for example, a CPU, DSP, FPGA, or the like, and cooperate with the memory 42 in accordance with the program and data stored in advance in the memory 42.

The memory 42 is configured using, for example, RAM and ROM, and temporarily holds programs and data necessary for executing the operations of the secret sharing location 40, and data or information generated during operations. The RAM is, for example, a work memory used during the operation of the secret sharing location 40. The ROM stores and holds in advance, for example, programs and data used to control the secret sharing location 40.

The storage device 43 is configured using, for example, HDD or SSD, and stores n pieces of centralization information.

The communication circuit 44 is configured using a circuit which communicates with various devices connected communicably with the secret sharing location 40. The communication circuit 44 executes data communication with each of the multiple user locations 20 and 30 via the network NW1 or NW1-1. The communication circuit 44 executes data communication with each of the multiple cloud servers S11, S12, S13 . . . S1n, S21, S22, S23 . . . and S2n via the network NW2.

<Generation of Distributed Data of Encryption Data and Preparation for Centralization>

The processor 41 executes distribution processing of the encrypted data sent from, for example, the user location 20 via the communication circuit 44. In the distribution processing, based on the distribution execution program, distributed data for n pieces of encrypted data is generated, and information for centralizing n pieces of encrypted data to be used by the central execution program is generated in preparation for centralization. The contents of the information for centralizing n pieces of encrypted data correspond to the distributed data for n pieces of encrypted data, and are the same as the contents of the distribution information used when generating the distributed data for encrypted data.

The processor 41 sends the distributed data of n pieces of encrypted data to n cloud servers S11, S12, S13 . . . S1n via the communication circuit 44. At this time, the processor 41 stores the centralization information of the n pieces of encrypted data in the storage device 43.

<Generation of Distributed Data of Key and Preparation for Centralization>

Distribution processing related to the key and centralization processing are executed in the same manner as the distribution processing of the encrypted data and the centralization processing. In other words, the processor 41 executes distribution processing of keys sent from, for example, the user location 20 via the communication circuit 44. In this distribution processing, based on the distribution execution program, distributed data of n keys is generated, and centralized information for n keys for keys used by the centralization execution program is generated in preparation for centralization. The contents of centralization information for n keys correspond to the distributed data of n keys, and are the same as the contents of the distribution information used when generating the distributed data of keys.

The processor 41 sends the distribution data of n keys to n cloud servers S21, S22, S23 . . . S2n via the communication circuit 44. At this time, the processor 41 stores the centralization information for the n keys in advance in the storage device 43.

<Centralization processing of Distributed Data of Encryption Data and Distributed Data of Keys>

When the centralization processing is executed, the processor 41 receives a centralization request from, for example, the user location 20, via the communication circuit 44. For example, the distribution/centralization execution identification code linked to the recovery management information may be sent from the user location 20 or the processor 41 may determine the encrypted data and keys to be centralized based on a predetermined request signal agreed at the user location 20.

The processor 41 sends a request for acquisition of the distributed data of the encrypted data corresponding to the user location 20, and the distributed data of keys, to each of the cloud servers S11 to S1n and cloud servers S21 to S2n via the communication circuit 44.

In addition, the processor 41 reads the centralization information of the n pieces of encrypted data corresponding to the user location 20, and the centralization information of n keys corresponding thereto, from the storage device 43 and decompresses the information in the memory 42.

Then, based on the centralized execution program, the processor 41 processes the distributed data of the collected encrypted data, and the distributed data of the keys, to centralize the original encrypted data and the original keys. The encrypted data and the keys are sent from the secret sharing location 40 to the user location 20. In this case, only the network NW1 may be used or the network NW1-1 may be used. If the user location 20 stores the keys, only the encrypted data may be sent from the secret sharing location 40 via the network NW1.

FIG. 3 shows an example of a block configuration of the hardware inside the cloud servers S11, S12, S13 . . . S1n, S21, S22, S23 . . . S2n. In the figure, the cloud server S11 is shown as a representative example.

The cloud server S11 includes a processor S111, a memory S112, a storage device S113, and a communication circuit S114.

The processor S111 is configured using, for example, a CPU, DSP, FPGA, or the like, and cooperate with the memory S112 in accordance with the program and data stored in advance in the memory S112.

The memory S112 is configured using, for example, RAM and ROM, and temporarily holds programs and data necessary for executing the operations of the cloud server S11, and data or information generated during operations. The RAM is, for example, a work memory used during the operation of the cloud server S11. The ROM stores and holds in advance, for example, programs and data used to control the cloud server S11.

The storage device S113 is configured using, for example, HDD or SSD, and stores distributed data of n pieces of distributed encrypted data. A storage device of a cloud server for keys stores the distributed data of n keys.

The communication circuit S114 is configured using a circuit which communicates with various devices connected communicably with the cloud server S11. The communication circuit S114 executes data communication with the secret sharing location 40 via the network NW2.

The processor S111 stores the distributed data of the encrypted data received from the secret sharing location 40, in the storage device S113 via the communication circuit S114. A cloud server which stores the distributed data of keys stores the distributed data of the keys, in the storage device.

When receiving a request to acquire the distributed data of the encrypted data from the secret sharing location 40 via the communication circuit S114, the processor S111 reads the distributed data of the encrypted data stored in the storage device S113 and sends the data to the secret sharing location 40. The cloud server that stores the distributed data of the keys reads the distributed data of the keys from the storage device and sends the data to the secret sharing location 40.

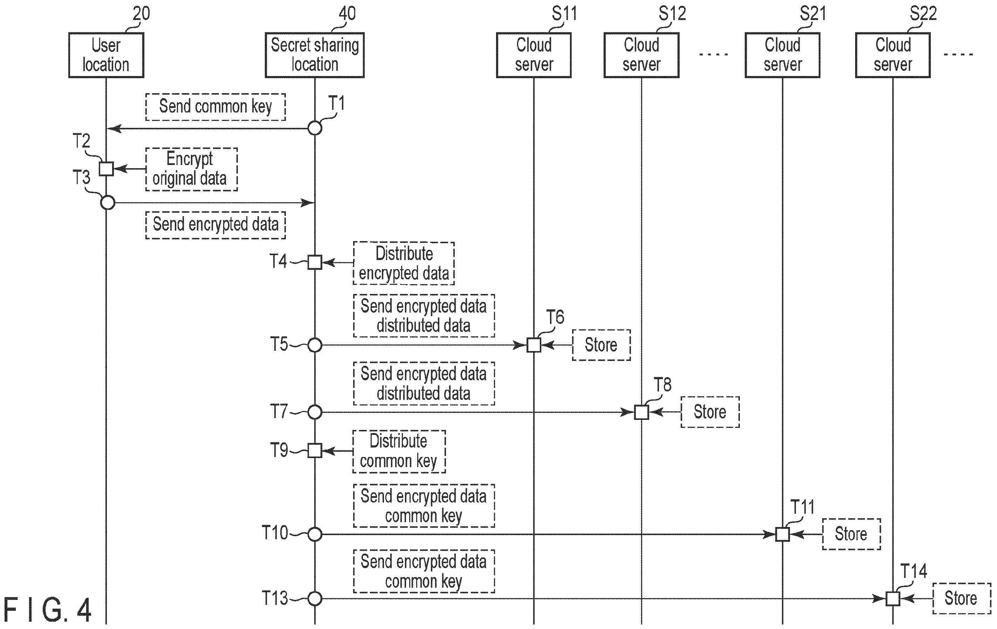

FIG. 4 is a view illustrating a sequence between configuration blocks forming the secret sharing-based storage system shown in FIG. 1.

It is assumed that the user location 20 requests secret sharing from the secret sharing location 40. This request may be made via a network, a telephone line, or the like.

Then, the secret sharing location 40 sends the common key to the user location 20 (time T1). The user location 20 encrypts the original data using the common key (time T2). The user location 20 then sends the encrypted data obtained by encrypting the original data to the secret sharing location 40 (time T3).

The secret sharing location 40 executes a distribution process to distribute the received encrypted data to the cloud server (time T4). The secret sharing location 40 then sends the distributed data obtained by encrypting the encrypted data to, for example, the cloud server S11 (time T5). The cloud server S11 stores the distributed data of the encrypted data that has been sent (time T6). Furthermore, the secret sharing location 40 then sends the distributed data obtained by encrypting the encrypted data to, for example, the cloud server S12 (time T7). The cloud server S12 stores the distributed data of the encrypted data that has been sent (time T8).

The secret sharing location 40 also executes distribution for the common key (time T9). The secret sharing location 40 then sends the first common key distributed data to the cloud server S21 and sends the second common key distributed data to the cloud server S22 (times T10 and T13). Thus, the secret sharing location 40 sends the common key distributed data to the cloud servers one after another. Each of the cloud servers S21 and S22 receiving the common key distributed data stores the common key distributed data (T11 and T14).

In FIG. 4, the situation that the distributed data of the encrypted data is sent to each of the cloud servers S11 and S12 is illustrated. In reality, however, it is ideal to send the distributed data of the encrypted data to the same number of different cloud servers as the number of distributions. If the number of cloud servers is small, one cloud server may be used twice or three times. In this case, the destinations of distribution are desirably allocated to the servers used twice or three times so as to avoid storing sequential distributed data (adjacent distributed data) within a single server.

In FIG. 4, to make the descriptions easily understood, the timing of sending the encrypted distributed data is separated from the timing of sending the common key distributed data but, of course, the timing of sending each piece of distributed data may be mixed. In addition, a function of shifting (awaiting) the timing of sending the distributed data (transmission time) depending on a busy state of each cloud server is provided in the communication circuit of the secret sharing location.

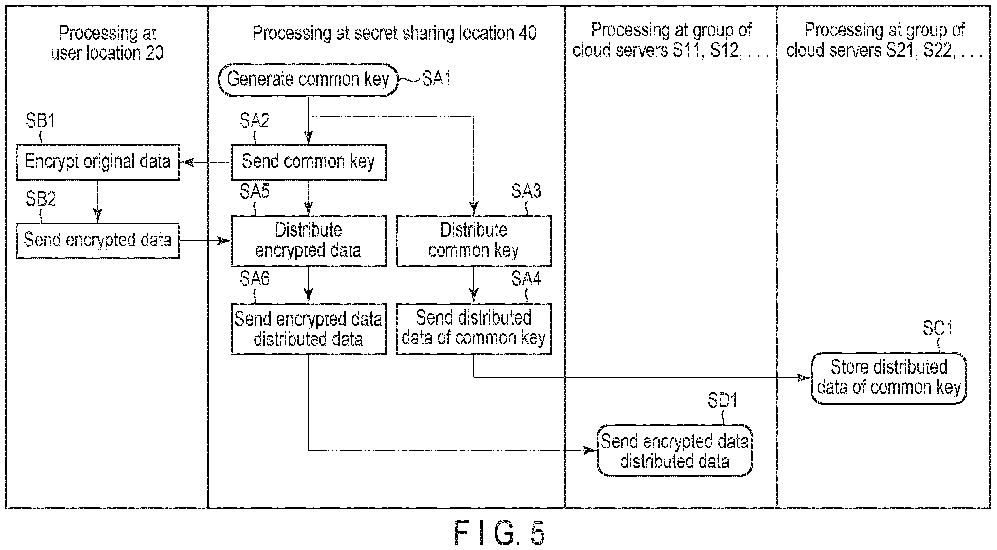

FIG. 5 is a flowchart showing operations of the configuration blocks forming the secret sharing-based storage system shown in FIG. 1, and connections between the configuration blocks.

At the secret sharing location 40, a common key is generated (step SA1), and then the common key is sent to the user location 20 (step SA2). In addition, the common key is distributed (SA3), and the distributed data of the common key is sent to the cloud servers S21, S22, . . . (cloud server group) (SA4). The cloud servers S21, S22, . . . store the received distributed data of the common key (step SC1).

The user location 20 receiving the common key encrypts the original data using this common key (step SB1), and then sends the encrypted data to the secret sharing location 40 (step SB2).

The secret sharing location 40, which has received the encrypted data, distributes the encrypted data (step SA5), and then sends the encrypted distributed data to the cloud server group (step SA6). The group of cloud servers S11, S12, . . . receiving the encrypted distributed data stores the received encrypted distributed data (step SD1).

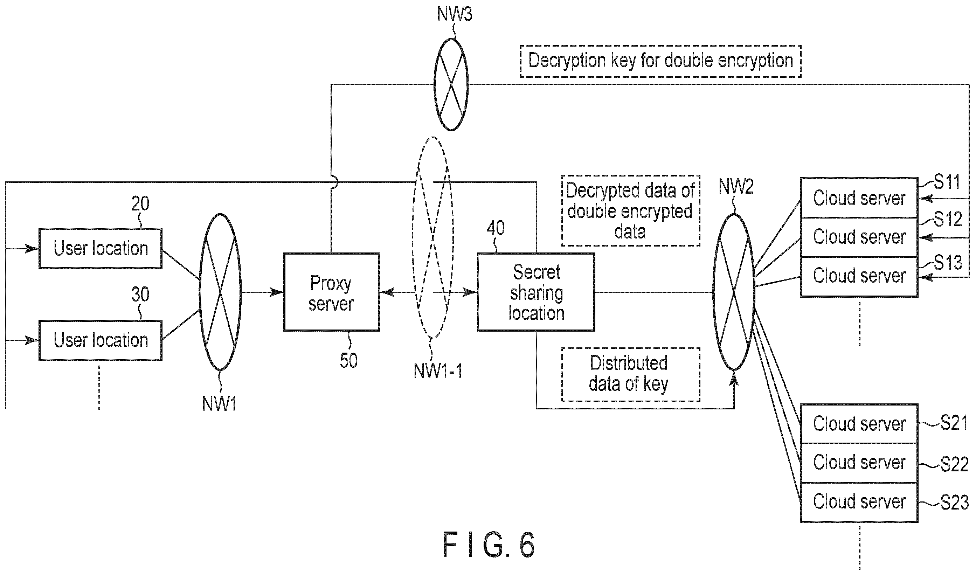

FIG. 6 is a view showing another configuration example of the secret sharing-based storage system of the embodiment.

In the embodiment, as compared to the embodiment in FIG. 1, a proxy server 50 is provided between the secret sharing location 40 and the network NW1. This proxy server 50 further encrypts the encrypted data (encrypted with key 1) sent from the user location 20 with key 2 to generate double-encrypted data. Then, in order to decrypt the double-encrypted data to the encrypted data encrypted with the key 1, the proxy server 50 sends the decryption key for double encryption to the cloud servers S11, S12, S13, ... via the network NW3. Incidentally, not only the network NW3, but also the network NW2 may be used as a transmission route for the decryption key for double encryption.

In addition, the proxy server 50 sends the double-encrypted data to the secret sharing location 40. The secret sharing location 40 executes the process of converting the double-encrypted data directly as it is into distributed data. The secret sharing location 40 then sends the double-encrypted data distributed data to the cloud servers S11, S12, S13, . . . via the network NW2. In addition, the secret sharing location 40 sends the distributed data for the key 1 to the cloud servers S21, S22, S23, ....

In the embodiment, the cloud servers S11, S12, S13, . . . decrypt the double-encrypted data distributed data using the key 2 and store the encrypted data distributed data that has been encrypted using the key 1.

In the embodiment, the secret sharing location 40 does not decrypt primary encrypted data received from the proxy server 50, but converts the data as it is into secondary (double) encrypted data. Therefore, the confidentiality of the encrypted data at the secret sharing location 40 is further improved.

The other operations are the same as those in the embodiment of FIG. 1. According to the embodiment, the confidentiality of the double encrypted data sent to the secret sharing location 40 is improved since the proxy server 50 is provided. In addition, in the embodiment, when generating the distributed data at the secret sharing location 40, the double-encrypted data is not decrypted, but is used as it is to generate the double-encrypted data distributed data. Therefore, the load for generating the distributed data at the secret sharing location 40 does not change from that in the embodiment shown in FIG. 1, and the confidentiality of the encrypted data is improved.

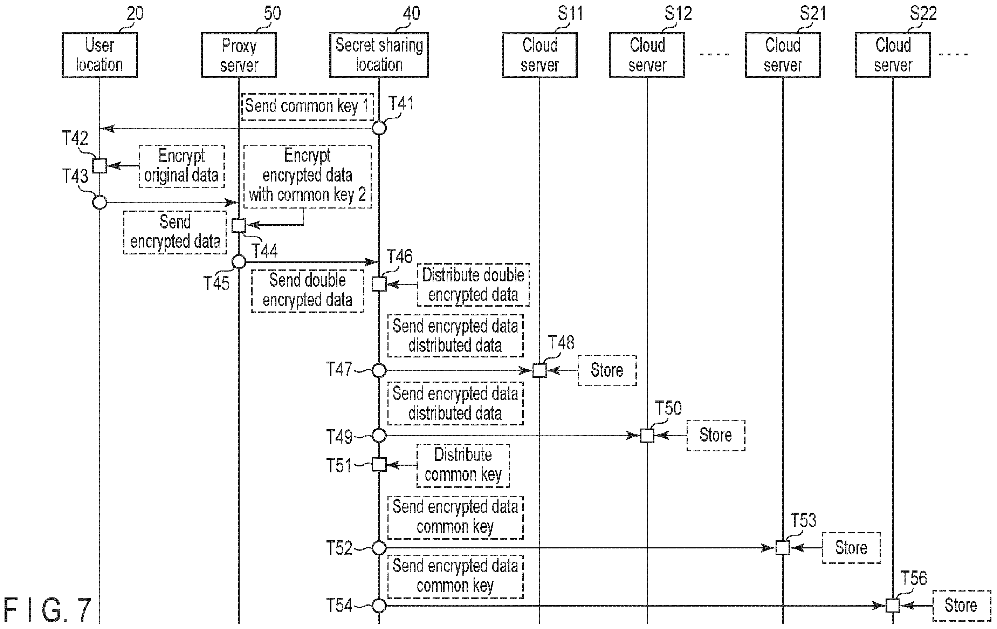

FIG. 7 is a view illustrating a sequence between configuration blocks forming the secret sharing-based storage system shown in FIG. 6.

It is assumed that the data needs to be sent at the user location 20. Then, the secret sharing location 40 sends the common key 1 to the user location 20 (time T41). The user location 20 encrypts the original data using the common key 1 to generate the encrypted data (time T42). Next, the user location 20 sends the encrypted data to the proxy server 50 (time T43).

The proxy server 50 further encrypts the encrypted data with the key 2 to generate the double-encrypted data (time T44). Furthermore, the proxy server 50 sends the double-encrypted data to the secret sharing location 40 (time T45).

The secret sharing location 40, which has received the double-encrypted data, converts the double-encrypted data into distributed data (time T46). Furthermore, the secret sharing location 40 sends first double-encrypted data distributed data to the cloud server S11 and sends second double-encrypted data distributed data to the cloud server S12. Thus, the secret sharing location 40 sends the double-encrypted data distributed data to the cloud servers one after another. Each of the cloud servers S11, S12, ... once stores the received double-encrypted data distribution data, decrypts the data with a decryption key for double encryption received from the proxy server 50, converts the data into encrypted data distributed data, and stores the data again. Incidentally, the timing for decrypting using the decryption key for the double encryption may be the timing immediately after receiving the double-encrypted data distribution data or may be the timing after a certain time interval.

The secret sharing location 40 also executes distribution for the common key (time T51). The secret sharing location 40 then sends the first common key distributed data to the cloud server S21 and sends the second common key distributed data to the cloud server S22 (times T52 and T54). Thus, the secret sharing location 40 sends the common key distributed data to the cloud servers one after another. Each of the cloud servers S21 and S22 receiving the common key distributed data stores the common key distributed data (T53 and T56).

In FIG. 7, to make the descriptions easily understood, the timing of sending the encrypted distributed data is separated from the timing of sending the common key distributed data but, of course, the timing of sending each piece of distributed data may be mixed. In addition, a function of shifting (awaiting) the timing of sending the distributed data (transmission time) depending on a busy state of each cloud server is provided in the communication circuit of the secret sharing location.

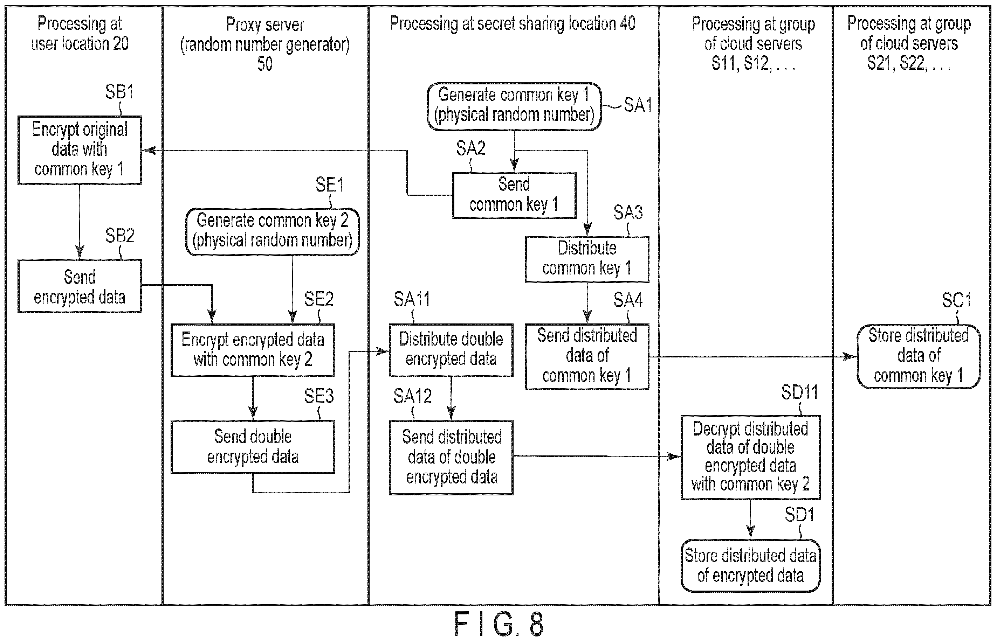

FIG. 8 is a flowchart showing operations of the configuration blocks forming the secret sharing-based storage system shown in FIG. 6, and connections between the configuration blocks.

At the secret sharing location 40, a common key 1 is generated (step SA1), and then the common key 1 is sent to the user location 20 (step SA2). In addition, the common key 1 is distributed (step SA3), and the distributed data of the common key 1 is sent to the cloud servers S21, S22, . . . (step SA4). The cloud servers S21, S22, . . . store the received distributed data of the common key 1 (step SC1).

In addition, the user location 20 receiving the common key 1 encrypts the original data using this common key 1 (step SB1), and then sends the encrypted data to the proxy server 50 (step SB2).

The proxy server 50 includes a random number generator, and uses the generated physical random number as common key 2 (step SE1). Furthermore, the proxy server 50 encrypts the encrypted data sent from the user location 20 using the common key 2. As a result, double-encrypted data is generated (step SE2). The proxy server 50 sends the double-encrypted data to the secret sharing location 40.

The secret sharing location 40, which has received the double-encrypted data, distributes the double-encrypted data and generates distributed data of the double-encrypted data (step SA11). Next, the secret sharing location 40 sends the double-encrypted data distributed data to the group of cloud servers S11, S12, . . . (step SA12).

The group of cloud servers S11, S12, ... decrypts the received double-encrypted data distributed data with the common key 2 to generate the encrypted data distributed data (step SD11). The group of cloud servers S11, S12, . . . then stores the generated encrypted data distributed data (step SD1).

In the above-described system, the proxy server 50 is provided, and the confidentiality of the double-encrypted data sent to the secret sharing location 40 is thereby improved. In addition, in the embodiment, when generating the distributed data at the secret sharing location 40, the double-encrypted data is not decrypted, but is used as it is to generate the double-encrypted data distributed data. Therefore, the load for generating the distributed data at the secret sharing location 40 does not change from that in the embodiment shown in FIG. 1, and the confidentiality of the encrypted data is improved.

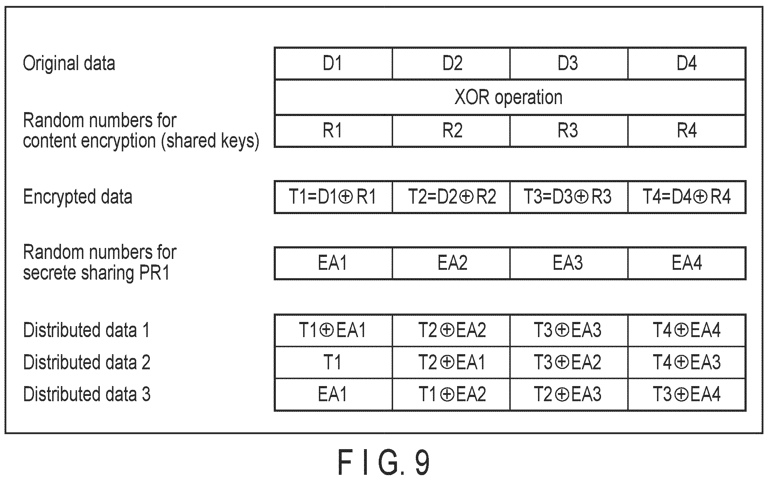

FIG. 9 is an explanatory table illustrating a basic method of generating distributed data in the secret sharing-based storage system of the embodiment. The example in the table shows an example of generating three pieces of distributed data from the original data.

In FIG. 9, XOR indicates an exclusive OR operation (hereafter abbreviated as XOR operation).

In FIG. 9, it is assumed that the processing unit length of the original data (also referred to as plain text data or contents) is formed by four block data D1, D2, D3, and D4. In the common key (also referred to as a random number for content encryption or a physical random number) for encrypting such original data, the data length is the same as the length of the original data. In addition, four block data R1, R2, R3, and R4 (unit lengths) corresponding to the data block data D1, D2, D3, and D4 are used.

Then, in order to generate the encrypted data T1, T2, T3, and T4, the corresponding blocks of the block data D1, D2, D3, and D4 and the block data R1, R2, R3, and R4 are subjected to the XOR operation as follows.

$$T1 = D1 \ XOR \ R1$$

$$T2 = D2 \ XOR \ R2$$

$$T3 = D3 \ XOR \ R3$$

$$T4 = D4 \ XOR \ R4$$

Next, in order to generate distributed data 1, distributed data 2, and distributed data 3, secret sharing random numbers EA1, EA2, EA3, and EA4 are generated.

Furthermore, the corresponding blocks of the generated secret sharing random numbers EA1, EA2, EA3, and EA4 and the encrypted data T1, T2, T3, and T4 are subjected to the XOR operation to generate the distributed data 1 as follows.

First block of distributed data 1 = T1 XOR EA1
Second block of distributed data 1 = T2 XOR EA2
Third block of distributed data 1 = T3 XOR EA3
Fourth block of distributed data 1 = T4 XOR EA4

In addition, the generated secret sharing random numbers EA1 to EA4 are shifted one block to the right side, and are subjected to the XOR operation with the encrypted data T1, T2, T3, and T4 to create the distributed data 2 as follows.

First block of distributed data 2 = T1
Second block of distributed data 2 = T2 XOR EA1
Third block of distributed data 2 = T3 XOR EA2
Fourth block of distributed data 2 = T4 XOR EA3

In addition, the encrypted data T1, T2, T3, and T4 are shifted one block to the right side, and are subjected to the XOR operation with the secret sharing random numbers EA1, EA2, EA3, and EA4 to create the distributed data 3 as follows.

First block of distributed data 3 = EA1
Second block of distributed data 3 = T1 XOR EA2
Third block of distributed data 3 = T2 XOR EA3
Fourth block of distributed data 3 = T3 XOR EA4

The servers of storing destinations that store the above distributed data 1, distributed data 2, and distributed data 3 are determined. A random number P1 for determining the servers of storing destinations may be generated, and the servers of storing destinations may be determined under a predetermined rule in accordance with the value of P1. For example, if the remainder of the value 3 of random number P1 is calculated and the remainder is 0, the distributed data 1 may be stored on the cloud server S11, the distributed data 2 may be stored on the cloud server S12, and the distributed data 3 may be stored on the cloud server S13. If the remainder is 1, the distributed data 1 may be stored on the cloud server S12, the distributed data 2 may be stored on the cloud server S13, and the distributed data 3 may be stored on the cloud server S11. If the remainder is 2, the distributed data 1 may be stored on the cloud server S13, the distributed data 2 may be stored on the cloud server S11, and the distributed data 3 may be stored on the cloud server S12.

Incidentally, the secret sharing location 40 and the cloud servers comprise a mutual authentication function, and the distributed data is sent after mutual authentication is confirmed. Naturally, the secret sharing location 40 stores the information of the cloud servers of the send destinations, and stores information (or random number P1) indicating which server the distributed data 1, the distributed data 2, and the distributed data 3 are sent to.

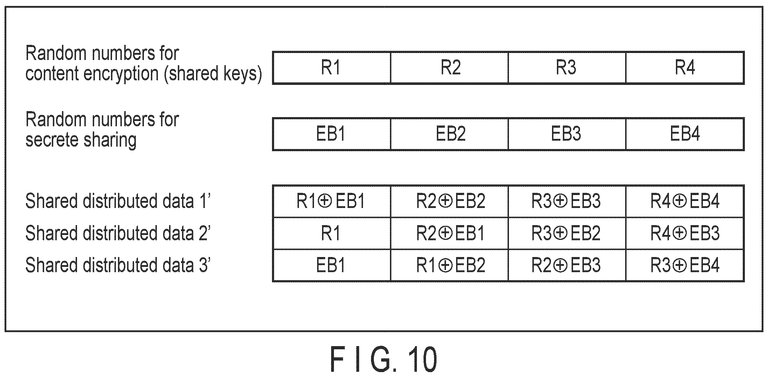

FIG. 10 is an explanatory table illustrating a basic method of generating common key distributed data in the secret sharing-based storage system of the embodiment.

Next, in order to generate common key distributed data 1', common key distributed data 2', and common key distributed data 3', random numbers EB1, EB2, EB3, and EB4 are generated. The corresponding blocks of the generated secret sharing random numbers EB1, EB2, EB3, and EB4 and common keys R1, R2, R3, and R4 are subjected to the XOR operation to generate the distributed data 1 as follows. In the following formula, the symbols with + inside circles are originally described, but replaced with exclusive OR, i.e., XOR.

First block of common key distributed data 1' = R1 XOR EB1
Second block of common key distributed data 1' = R2 XOR EB2
Third block of common key distributed data 1' = R3 XOR EB3
Fourth block of common key distributed data 1' = R4 XOR EB4

In addition, the corresponding blocks of the generated secret sharing random numbers EB1, EB2, and EB3 and common keys R1, R2, R3, and R4 are subjected to the XOR operation to generate the distributed data 2 as follows.

First block of common key distributed data 2' = R1
Second block of common key distributed data 2 = R2 XOR EB1
Third block of common key distributed data 2' = R3 XOR EB2
Fourth block of common key distributed data 2' = R4 XOR EB3

Furthermore, the common keys R1, R2, and R3 are shifted one block to the right side, and are subjected to the XOR operation with the secret sharing random numbers EB1, EB2, EB3, and EB4 to create the distributed data 3 as follows.

First block of common key distributed data 3' = EB1

Second block of common key distributed data 3' = R1 XOR EB2

Third block of common key distributed data 3' = R2 XOR EB3

Fourth block of common key distributed data 3' = R3 XOR EB4

The storage destinations of the three common key distributed data generated in the above-described method may be determined according to the value of the random number for secret sharing. For example, if the random number P2 is generated and the value of P2 is divided by 3 such that the remainder is 0, the common key distributed data 1' is stored on the cloud server S21, the common key distributed data 2' is stored on the cloud server S22, and the common key distributed data 3' is stored on the cloud server S23. Then, if the remainder is 1, the common key distributed data 1' is stored on the cloud server S22, the common key distributed data 2' is stored on the cloud server S23, and the common key distributed data 3' is stored on the cloud server S21. Furthermore, if the remainder is 2, the common key distributed data 1' is stored on the cloud server S23, the common key distributed data 2' is stored on the cloud server S21, and the common key distributed data 3' is stored on the cloud server S22.

Incidentally, the secret sharing location 40 and the cloud servers are equipped with mutual authentication functions, and the common key distributed data is sent after mutual authentication is confirmed. Naturally, the secret sharing location 40 stores information (as described above in P2) indicating which server the common key distributed data 1' is sent to.

Next, a procedure of collecting the distributed data stored in the above-mentioned multiple cloud servers and restoring the original encrypted data will be described.

The secret sharing location 40 requests the cloud server to send the distributed data to the secret sharing location 40 by referring to the distributed management information. Incidentally, in the embodiment, two of three pieces of distributed data may be collected. The steps will be described below.

a) When collecting the distributed data 1 and the distributed data 2,

the secret sharing location 40 restores T1 from the first block of the distributed data 2;
restores EA1 by executing the XOR operation for the restored T1 and the first block of the distributed data 1;
restores T2 by executing the XOR operation for the restored EA1 and the second block of the distributed data 2;
restores EA2 by executing the XOR operation for the restored T2 and the second block of the distributed data 1;
restores T3 by executing the XOR operation for the restored EA2 and the third block of the distributed data 2;
restores EA3 by executing the XOR operation for the restored T3 and the third block of the distributed data 1;
restores T4 by executing the XOR operation for the restored EA3 and the fourth block of the distributed data 2; and
restores EA4 by executing the XOR operation for the restored ST4 and the fourth block of the distributed data 1.

b) When collecting the distributed data 1 and the distributed data 3,

the secret sharing location 40 restores EA1 from the first block of the distributed data 3;
restores T1 by executing the XOR operation for the restored EA1 and the first block of the distributed data 1;
restores EA2 by executing the XOR operation for the restored T1 and the second block of the distributed data 3;
restores T2 by executing the XOR operation for the restored EA2 and the second block of the distributed data 1;
restores EA3 by executing the XOR operation for the restored T2 and the third block of the distributed data 3;
restores T3 by executing the XOR operation for the restored EA3 and the third block of the distributed data 1;
restores EA4 by executing the XOR operation for the restored T3 and the fourth block of the distributed data 3; and
restores T4 by executing the XOR operation for the restored EA4 and the fourth block of the distributed data 1.

c) When collecting the distributed data 2 and the distributed data 3,

the secret sharing location 40 restores T1 from the first block of the distributed data 2;
restores EA1 from the first block of the distributed data 3;
restores EA2 by executing the XOR operation for the restored T1 and the second block of the distributed data 3;
restores T2 from the restored EA1 and the second block of the distributed data 2;
restores T3 by executing the XOR operation for the restored EA2 and the third block of the distributed data 2;
restores EA3 by executing the XOR operation for the restored T2 and the third block of the distributed data 3;
restores T4 by executing the XOR operation for the restored EA3 and the fourth block of the distributed data 2; and
restores EA4 by executing the XOR operation for the restored T3 and the fourth block of the distributed data 3.

Next, a procedure of collecting the common key distributed data stored in the above-mentioned multiple cloud servers and restoring the original common keys R1 to R4 will be described.

The secret sharing location 40 requests the cloud server to send the common key distributed data to the secret sharing location 40 by referring to the distributed management information. The secret sharing location 40 can restore the common keys R1 to R4 from the three pieces of common key distributed data 1' to 3' in the following procedure cover the common key if at least two sets of distributed data exist.

a) When collecting the common key distributed data 1' and the common key distributed data 2',

the secret sharing location 40 restores R1 from the first block of the common key distributed data 2';
restores EB1 by executing the XOR operation for the restored R1 and the first block of the common key distributed data 1';
restores R2 by executing the XOR operation for the restored EB1 and the second block of the common key distributed data 2';
restores EB2 by executing the XOR operation for the restored R2 and the second block of the common key distributed data 1';
restores R3 by executing the XOR operation for the restored EB2 and the third block of the common key distributed data 2';
restores EB3 by executing the XOR operation for the restored R3 and the third block of the common key distributed data 1';
restores R4 by executing the XOR operation for the restored EB3 and the fourth block of the common key distributed data 2'; and
restores EB4 by executing the XOR operation for the restored R4 and the fourth block of the common key distributed data 1'.

b) When collecting the common key distributed data 1' and the common key distributed data 3',

restores EB1 from the first block of the common key distributed data 3';
restores R1 by executing the XOR operation for the restored EB1 and the first block of the common key distributed data 1';
restores EB2 by executing the XOR operation for the restored R1 and the second block of the common key distributed data 3';
restores R2 by executing the XOR operation for the restored EB2 and the second block of the common key distributed data 1';

restores EB3 by executing the XOR operation for the restored R2 and the third block of the common key distributed data 3';

restores R3 by executing the XOR operation for the restored EB3 and the third block of the common key distributed data 1';

restores EB4 by executing the XOR operation for the restored R3 and the fourth block of the common key distributed data 3'; and

restores R4 by executing the XOR operation for the restored EB4 and the fourth block of the common key distributed data 1'.

c) When collecting the common key distributed data 2' and the common key distributed data 3,

the secret sharing location 40 restores R1 from the first block of the common key distributed data 2';

restores EB1 from the first block of the common key distributed data 3';

restores EB2 by executing the XOR operation for the restored R1 and the second block of the common key distributed data 3';

restores R2 from the restored EB1 and the second block of the common key distributed data 2';

restores R3 by executing the XOR operation for the restored EB2 and the third block of the common key distributed data 2';

restores EB3 by executing the XOR operation for the restored R2 and the third block of the common key distributed data 3';

restores R4 by executing the XOR operation for the restored EB3 and the fourth block of the common key distributed data 2'; and

restores EB4 by executing the XOR operation for the restored R3 and the fourth block of the common key distributed data 3'.

When the encrypted data T1 to T4 and the common keys R1 to R4 are restored in the above procedure, the original data D1 to D4 can be restored as follows.

$$D1 = T1 \; XOR \; R1$$

$$D2 = T2 \; XOR \; R2$$

$$D3 = T3 \; XOR \; R3$$

$$D4 = T3 \; XOR \; R4$$

As described above, the secret sharing-based storage system of the invention secretly shares and stores plain text data in three cloud servers S11, S12, and S13 and, at the same time, stores the common key in three cloud servers S21, S22, and S23. The data can be thereby stored with a high level of confidentiality. In addition, since the random numbers for secret sharing can be recovered from the distributed data, there is no need to store the random number keys for secret sharing at the secret sharing location, and the costs of key management can be reduced. In addition, when restoring, the distributed data and the common key distributed data may be collected from any two of the above cloud servers S11, S12, and S13, and any two of the above cloud servers S21, S22, and S23, which can improve the availability of the system. Even if one cloud server is stopped for maintenance, inspection, or the like, the system can be made to operate normally as long as the other two cloud servers are operating normally.

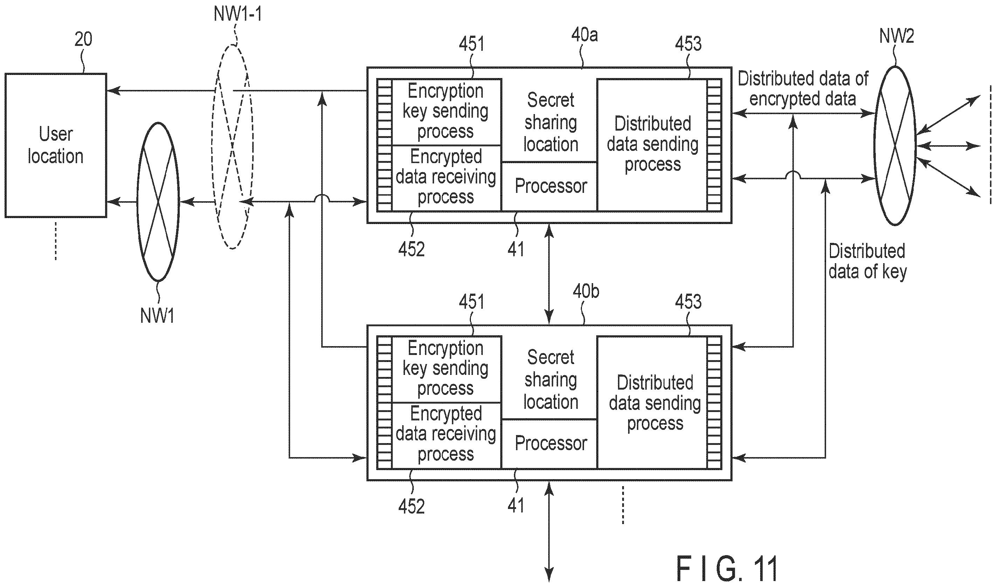

FIG. 11 shows yet another example of the secret sharing-based storage system. In the above-described the secret sharing-based storage system, secret sharing locations 40 are provided independently, and the system operator can perform maintenance and other tasks solely. In the embodiment, the system is designed such that if some kind of trouble occurs at one secret sharing location 40a, the other secret sharing location 40b starts up. Two secret sharing locations 40a and 40b are shown in the figure, but more secret sharing locations may be added.

Each of the secret sharing locations 40a and 40b has the same configuration, and comprises an encryption key sending function 451, an encrypted data receiving function 452, and a distributed data sending function 453. Each of the secret sharing locations 40a and 40b comprises the processor 41 as described with reference to FIG. 3 and FIG. 4.

The processors at the secret sharing locations 40a and 40b can monitor each other's job status. The job status indicates whether authentication operates normally or whether data is sent and received normally. This can be executed by, for example, checking whether an acknowledgment (reply) has been received from a communication partner within a specified time when a request or command has been sent to the communication partner. If no response is made, the processor 41 of the currently operating secret sharing location can consider the status abnormal and offer to take over the role of the processor of the other secret sharing location having mirror data. As a result, for example, the operation of the secret sharing location 40a is taken over by the secret sharing location 40b.

In addition, the system administrator can easily perform maintenance, repair, replacement or the like of the secret sharing location having a trouble, by receiving a notification from the secret sharing location via a warning notification function.

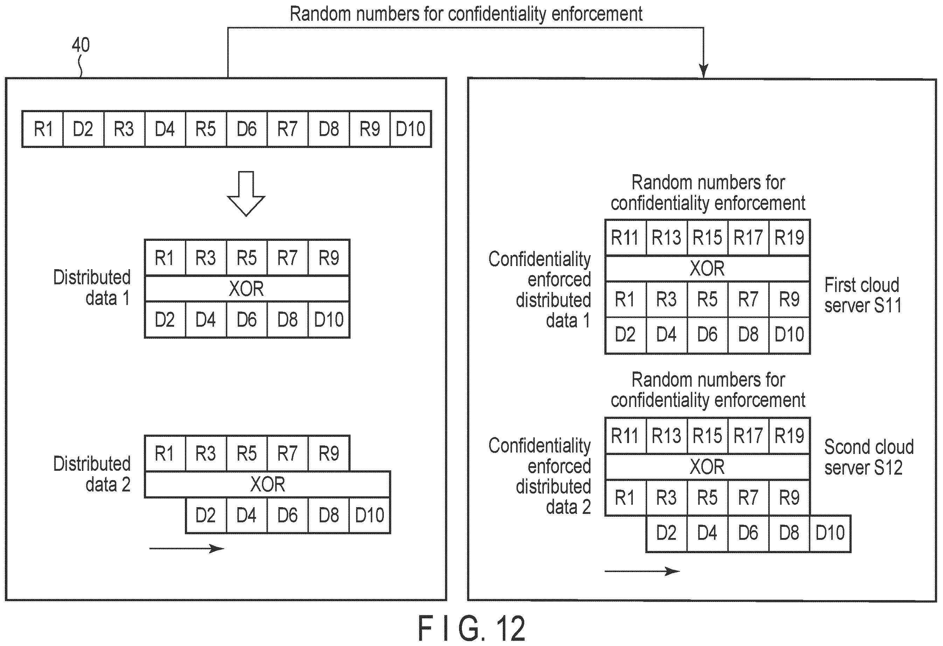

FIG. 12 is an explanatory diagram showing an example of measures to be taken in a case where random numbers for secret sharing in the embodiment are compromised. This example indicates a method for further enhancing the confidentiality, on the cloud server that receives and stores the distributed data.

It is assumed that the secret sharing location 40 has plain text data (actually, encrypted data) consisting of data blocks D2, D4, D6, D8, and D10, and that this plain text data is converted into the distributed data 1 using random number blocks R1, R3, R5, R7, and R9. At this time, the data blocks D2, D4, D6, D8, and D10 and the random number blocks R1, R3, R5, R7, and R9 are subjected to the XOR operation for each corresponding block to generate the distributed data 1.

Next, the data block and the random number block are converted into the distributed data 2. At this time, for example, the data block is shifted by one block for the random number block and is subjected to the XOR operation to generate the distributed data 2.

The above-described distributed data 1 and 2 are sent to the cloud servers S11 and S12, respectively.

After that, for example, when the random numbers R1, R3, R5, R7, and R9 used in the above secret sharing are compromised, the random numbers for enhancing confidentiality are sent to each of the cloud servers S11 and S12. In the cloud server S11, the random numbers for enhancing confidentiality are subjected to the XOR operation for the distributed data 1 to generate confidentiality enhanced distributed data 1", which is replaced with the original distributed data 1. Similarly, in the cloud server S12, the random numbers for enhancing confidentiality are subjected to the XOR operation for the distributed data 2 to generate confidentiality enhanced distributed data 2", which is replaced with the original distributed data 2.

The random numbers for enhancing confidentiality may be used when requested by the user as an option. In addition, the random numbers for enhancing confidentiality may also be used depending on the version of the cloud server.

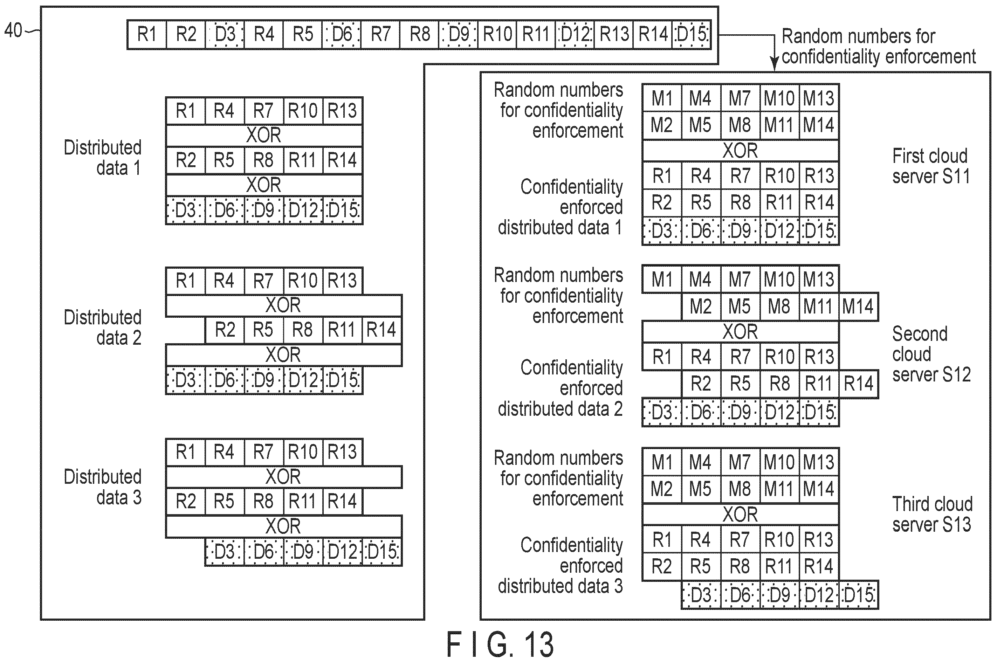

FIG. 13 is a view illustrating yet another example of the distributed data creating method in the embodiment. This example also indicates a method for further enhancing the confidentiality, on the cloud server that receives and stores the distributed data.

It is assumed in this example that the secret sharing location 40 has plain text data (actually, encrypted data) consisting of data blocks D3, D6, D9, D12, and D15. This plain text data is converted into the distributed data 1 using a double random number block consisting of the random number blocks R1, R4, R7, R10, and R13 and the blocks R2, R5, R8, R11, and R14.

At this time, for example, the random number blocks R1, R4, R7, R10, and R13 and the blocks R2, R5, R8, R11, and R14 are subjected to the XOR operation and, for the result of this operation, the data blocks D3, D6, D9, D12, and D15 are subjected to the XOR operation to generate the distributed data 1.

Next, for the distributed data 2, the random number blocks R1, R4, R7, R10, and R13 and the blocks R2, R5, R8, R11, and R14 are subjected to the XOR operation in a state of being shifted by one block in the row direction to generate a double random number block.

The double random number block and the data blocks D3, D6, D9, D12, and D15 are subjected to the XOR operation to generate the distributed data 2. As shown in the figure, the blocks R1 and D3 correspond to the column direction, and the block R4, R2, and D6 correspond to the row direction.

Then, for the distributed data 3, the random number blocks R1, R4, R7, R10, and R13 and the blocks R2, R5, R8, R11, and R14 are subjected to the XOR operation in a state of corresponding to the row direction (i.e., a state of not being shifted in the row direction) to generate a double random number block. This double random number block and the data blocks D3, D6, D9, D12, and D15 are subjected to the XOR operation while shifted one block in the row direction to generate the distributed data 3. In the figure, the blocks R4, R5, and D3 correspond to the column direction.

The above-described distributed data 1, 2, and 3 are sent to the cloud servers S11, S12, and S13, respectively. In the embodiment, the random number for enhancing confidentiality is sent to each of the cloud server S11, S12, and S13. At the cloud server S11, a double random number for enhancing confidentiality is subjected to the XOR operation for the distributed data 1 to generate confidentiality enhanced distributed data 1". Similarly, at the cloud server S12, a double random number for enhancing confidentiality is subjected to the XOR operation for the distributed data 2 to generate confidentiality enhanced distributed data 2". Furthermore, at the cloud server S12, a double random number for enhancing confidentiality is subjected to the XOR operation for the distributed data 3 to generate confidentiality enhanced distributed data 3".

In the above double random number for enhancing the confidentiality, the first line is composed of the random number blocks M1, M4, M7, M10, and M13, and the second line is composed of the random number blocks M2, M5, M8, M11, and M14. When the confidentiality enhanced distributed data 1" is generated, M2 corresponds to the random number block M1, M5 corresponds to M4, M8 corresponds to M7, M11 corresponds to M10, and M14 corresponds to M13. However, when the confidentiality enhanced distributed data 2" is generated, the relationship in block correspondence between the random number blocks M1, M4, M7, M10, and M13 and the random number blocks M2, M5, M8, M11, and M14 is shifted. Therefore, the confidentiality enhanced distributed data 2" is different from the confidentiality enhanced distributed data 1" in content of confidentiality enhancement. Further confidentiality enhancement of the distributed data can be thereby obtained.

In the above descriptions, even if the term "function" is replaced with any of the terms "apparatus", "device", "block" or "module", the replacement comes within the scope of the invention as a matter of course. Furthermore, the constituent elements in claims are in the category of the embodiments even if the components are expressed separately, even if the components are expressed in association with each other or even if the components are expressed in combination with each other. In addition, even if the claim is expressed as a method, the device of the present invention is applicable.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A secret sharing-based storage method using a user location (20, 30), a secret sharing location (40), and multiple cloud servers (S11, S12, S13, ..., S21, S22, S23, ...), **characterized by** comprising:

    causing the user location (20, 30), to encrypt plain text data with a common key sent from the secret sharing location and sending the encrypted data to the secret sharing location (40) via a first network (NW1) ;
    causing the secret sharing location (40) to generate multiple pieces of key-distributed data obtained by distributing the common key, receiving the encrypted data from the first network (NW1), generating multiple pieces of encrypted data-distributed data obtained by distributing the encrypted data, and distributing and sending the multiple pieces of key-distributed data and the multiple pieces of encrypted data distributed data to the multiple cloud servers (S11, S12, S13, ..., S21, S22, S23, ...) via the second network (NW2); and
    causing each of the multiple cloud servers (S11, S12, S13, ..., S21, S22, S23, ...) to store the corresponding received encrypted data-distributed data and the corresponding received key-distributed data.

2. The secret sharing-based storage method of claim 1, **characterized in that**
when sending the common key to the user location (20, 30), the secret sharing location (40) uses one of a quantum line using an optical cable and the first network (NW1) different from the quantum line.

3. The secret sharing-based storage method of claim 1, **characterized in that**
when sending the common key, the secret sharing location (20, 30) is capable of selecting one of the first network (NW1) different from the quantum line and the quantum line using the optical cable, in accordance with the user location (20, 30) serving as a send destination.

4. The secret sharing-based storage method of claim 1, **characterized in that**
when receiving the encrypted data from the first network (NW1), the secret sharing location (20, 30) receives double encrypted data which is double-encrypted via a proxy server (50).

5. The secret sharing-based storage method of claim 1, **characterized in that**
when receiving the encrypted data from the first network (NW1), the secret sharing location (20, 30) receives double encrypted data which is double-encrypted via a proxy server (50) further encrypting the encrypted data, generates the multiple pieces of encrypted data distributed data using the double encrypted data as it is, and distributes and sends the multiple pieces of encrypted data distributed data based on the double encrypted data to the multiple cloud servers (S11, S12, S13, ..., S21, S22, S23, ...) via the second network (NW2).

6. The secret sharing-based storage method of claim 1, **characterized in that**

    when receiving the encrypted data from the first network (NW1), the secret sharing location (40) receives double encrypted data which is double-encrypted via a proxy server (50) further encrypting the encrypted data, and
    the proxy server (50) sends a key used for double encryption to the multiple cloud servers(S11, S12, S13, ..., S21, S22, S23, ...) as a key for decrypting only double encryption.

7. The secret sharing-based storage method of claim 1, **characterized in that**
the multiple secret sharing locations are provided and are usable to be changed.

8. A secret sharing-based storage system **characterized by** comprising:

    a user location (20,30) encrypting plain text data with a common key sent from the secret sharing location (40) and sending the encrypted data to the secret sharing location (40) via a first network (NW1);
    the secret sharing location (40) generating multiple pieces of key-distributed data obtained by distributing the common key, receiving the encrypted data from the first network (NW1), generating multiple pieces of encrypted data-distributed data obtained by distributing the encrypted data, and distributing and sending the multiple pieces of key-distributed data and the multiple pieces of encrypted data distributed data to the multiple cloud servers (S11, S12, S13, **...,** S21, S22, S23, ...) via the second network (NW2); and
the multiple cloud servers (S11, S12, S13, ..., S21, S22, S23, ...) storing the encrypted data distributed data corresponding to the respective cloud servers and the key-distributed data corresponding to the respective cloud servers.

9. The secret sharing-based storage system of claim 8, **characterized in that**

   the secret sharing location (40) includes a communication circuit (44), and
   when sending the common key to the user location(20, 30), the communication circuit (44) uses one of a quantum line using an optical cable and the first network different from the quantum line.

10. The secret sharing-based storage system of claim 8, **characterized in that**

   the secret sharing location (40) includes a communication circuit (44), and
   when sending the common key, the communication circuit (44) is capable of selecting one of the first network different from the quantum line and the quantum line using the optical cable, in accordance with the user location serving as a send destination.

11. The secret sharing-based storage system of claim 8, **characterized in that**

   the secret sharing location (40) includes a communication circuit (44), and
   when receiving the encrypted data from the first network, the communication circuit (44) receives double encrypted data which is double-encrypted via a proxy server (50).

12. The secret sharing-based storage system of claim 8, **characterized in that**

   the secret sharing location (40) includes a communication circuit (44), and
   when receiving the encrypted data from the first network, the communication circuit (44) receives double encrypted data which is double-encrypted via a proxy server (50) further encrypting the encrypted data, generates the multiple pieces of encrypted data distributed data using the double encrypted data as it is, and distributes and sends the multiple pieces of encrypted data distributed data based on the double encrypted data to the multiple cloud servers (S11, S12, S13, ..., S21, S22, S23, ...) via the second network (NW2).

13. The secret sharing-based storage system of claim 8, **characterized in that**

   the secret sharing location (40) includes a communication circuit (44),
   when receiving the encrypted data from the first network(NW1), the communication circuit (44) receives double encrypted data which is double-encrypted via a proxy server (50) further encrypting the encrypted data, and
   the proxy server (50) sends a key used for double encryption to the multiple cloud servers (S11, S12, S13, ..., S21, S22, S23, ...) as a key for decrypting only double encryption.

14. The secret sharing-based storage system of claim 8, **characterized in that**
   the multiple secret sharing locations (40a,40b) are provided and are usable to be changed.

F I G. 1

40

42

41

Memory

Processor

43

Storage device

44

Communication
circuit

F I G. 2

S11

S112

S111

Memory

Processor

S113

Storage device

S114

Communication
circuit

F I G. 3

F I G. 4

| Processing at user location 20 | Processing at secret sharing location 40 | Processing at group of cloud servers S11, S12, ... | Processing at group of cloud servers S21, S22, ... |

Generate common key — SA1

SB1
Encrypt original data ← SA2 Send common key

SB2
Send encrypted data → SA5 Distribute encrypted data

SA3 Distribute common key

SA6 Send encrypted data distributed data

SA4 Send distributed data of common key

SC1 Store distributed data of common key

SD1 Send encrypted data distributed data

F I G. 5

EP 4 625 879 A1

F I G. 6

FIG. 7

F I G. 8

EP 4 625 879 A1

| Original data | D1 | D2 | D3 | D4 |
|---|---|---|---|---|
| | XOR operation | | | |
| Random numbers for content encryption (shared keys) | R1 | R2 | R3 | R4 |
| Encrypted data | $T1=D1\oplus R1$ | $T2=D2\oplus R2$ | $T3=D3\oplus R3$ | $T4=D4\oplus R4$ |
| Random numbers for secrete sharing PR1 | EA1 | EA2 | EA3 | EA4 |
| Distributed data 1 | $T1\oplus EA1$ | $T2\oplus EA2$ | $T3\oplus EA3$ | $T4\oplus EA4$ |
| Distributed data 2 | T1 | $T2\oplus EA1$ | $T3\oplus EA2$ | $T4\oplus EA3$ |
| Distributed data 3 | EA1 | $T1\oplus EA2$ | $T2\oplus EA3$ | $T3\oplus EA4$ |

F I G. 9

| Random numbers for content encryption (shared keys) | R1 | R2 | R3 | R4 |
|---|---|---|---|---|
| Random numbers for secrete sharing | EB1 | EB2 | EB3 | EB4 |
| Shared distributed data 1' | R1⊕EB1 | R2⊕EB2 | R3⊕EB3 | R4⊕EB4 |
| Shared distributed data 2' | R1 | R2⊕EB1 | R3⊕EB2 | R4⊕EB3 |
| Shared distributed data 3' | EB1 | R1⊕EB2 | R2⊕EB3 | R3⊕EB4 |

FIG. 10

EP 4 625 879 A1

F I G. 11

Random numbers for confidentiality enforcement

40

| R1 | D2 | R3 | D4 | R5 | D6 | R7 | D8 | R9 | D10 |

⬇

Distributed data 1

| R1 | R3 | R5 | R7 | R9 |
| XOR | | | | |
| D2 | D4 | D6 | D8 | D10 |

Distributed data 2

| R1 | R3 | R5 | R7 | R9 |
| XOR | | | | |
| D2 | D4 | D6 | D8 | D10 |

Confidentiality enforced distributed data 1

Random numbers for confidentiality enforcement

| R11 | R13 | R15 | R17 | R19 |
| XOR | | | | |
| R1 | R3 | R5 | R7 | R9 |
| D2 | D4 | D6 | D8 | D10 |

First cloud server S11

Confidentiality enforced distributed data 2

Random numbers for confidentiality enforcement

| R11 | R13 | R15 | R17 | R19 |
| XOR | | | | |
| R1 | R3 | R5 | R7 | R9 |
| D2 | D4 | D6 | D8 | D10 |

Scond cloud server S12

F I G. 12

40 —

| R1 | R2 | D3 | R4 | R5 | D6 | R7 | R8 | D9 | R10 | R11 | D12 | R13 | R14 | D15 |

Random numbers for confidentiality enforcement

**Distributed data 1**

| R1 | R4 | R7 | R10 | R13 |
| XOR |
| R2 | R5 | R8 | R11 | R14 |
| XOR |
| D3 | D6 | D9 | D12 | D15 |

**Distributed data 2**

| R1 | R4 | R7 | R10 | R13 |
| XOR |
| R2 | R5 | R8 | R11 | R14 |
| XOR |
| D3 | D6 | D9 | D12 | D15 |

**Distributed data 3**

| R1 | R4 | R7 | R10 | R13 |
| XOR |
| R2 | R5 | R8 | R11 | R14 |
| XOR |
| D3 | D6 | D9 | D12 | D15 |

Random numbers for confidentiality enforcement

| M1 | M4 | M7 | M10 | M13 |
| M2 | M5 | M8 | M11 | M14 |
| XOR |

Confidentiality enforced distributed data 1

| R1 | R4 | R7 | R10 | R13 |
| R2 | R5 | R8 | R11 | R14 |
| D3 | D6 | D9 | D12 | D15 |

**First cloud server S11**

Random numbers for confidentiality enforcement

| M1 | M4 | M7 | M10 | M13 |
| M2 | M5 | M8 | M11 | M14 |
| XOR |

Confidentiality enforced distributed data 2

| R1 | R4 | R7 | R10 | R13 |
| R2 | R5 | R8 | R11 | R14 |
| D3 | D6 | D9 | D12 | D15 |

**Second cloud server S12**

Random numbers for confidentiality enforcement

| M1 | M4 | M7 | M10 | M13 |
| M2 | M5 | M8 | M11 | M14 |
| XOR |

Confidentiality enforced distributed data 3

| R1 | R4 | R7 | R10 | R13 |
| R2 | R5 | R8 | R11 | R14 |
| D3 | D6 | D9 | D12 | D15 |

**Third cloud server S13**

F I G. 13

Europäisches
Patentamt

European
Patent Office

Office européen
des brevets

# EUROPEAN SEARCH REPORT

**Application Number**

EP 25 16 2555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/147640 A1 (MATSUO MASAKATSU [JP] ET AL) 12 May 2022 (2022-05-12) <br> * abstract; figures 14,15 * <br> * paragraphs [0137] - [0152] * <br> - - - - - | 1-14 | INV. <br> H04L9/08 <br> G06F21/60 |

| | | | TECHNICAL FIELDS SEARCHED (IPC) |
|---|---|---|---|
| | | | H04L <br> G06F |

The present search report has been drawn up for all claims

| Place of search | Date of completion of the search | Examiner |
|---|---|---|
| Munich | 31 July 2025 | Wolters, Robert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
....................................................................
& : member of the same patent family, corresponding
    document

EPO FORM 1503 03.82 (P04C01)

# EP 4 625 879 A1

## ANNEX TO THE EUROPEAN SEARCH REPORT
## ON EUROPEAN PATENT APPLICATION NO.

EP 25 16 2555

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2025

| Patent document cited in search report | Publication date | Patent family member(s) | | Publication date |
|---|---|---|---|---|
| US 2022147640 A1 | 12-05-2022 | CN | 113474829 A | 01-10-2021 |
| | | EP | 3929896 A1 | 29-12-2021 |
| | | JP | 7356673 B2 | 05-10-2023 |
| | | JP | 2020134841 A | 31-08-2020 |
| | | US | 2022147640 A1 | 12-05-2022 |
| | | WO | 2020170695 A1 | 27-08-2020 |

EPO FORM P0459

For more details about this annex : see Official Journal of the European Patent Office, No. 12/82